# EUROPEAN PATENT SPECIFICATION

(11) **EP 1 464 459 B1**
(45) Date of publication and mention of the grant of the patent: **07.02.2007**
(21) Application number: 01274994.1
(22) Date of filing: 18.12.2001
(51) Int. Cl.: B26D 7/20

(54) **DEFORMABLE, FLOATING CUTTING DEVICE**
VERFORMBARE, SCHWIMMEND GELAGERTE SCHNEIDVORRICHTUNG
DISPOSITIF DE COUPE FLOTTANT DEFORMABLE

(43) Date of publication of application: 06.10.2004
(73) Proprietor: GRUPO ANTOLIN-INGENIERIA, S.A., 09007 Burgos (ES)
(72) Inventor: DE LA PENA ALONSO, Rubén, E-28214 Fresnedillas (Madrid) (ES)
(74) Representative: Carpintero Lopez, Francisco
(86) International application number: PCT/ES2001/000492
(87) International publication number: WO 2003/051591

(56) References cited:
- FR-A- 840 211
- GB-A- 989 674
- US-A- 2 120 926
- US-A- 3 269 234

## Description

### OBJECT OF THE INVENTION

The present invention relates to a cutting apparatus which will be termed deformable floating, for application in any pressure cutting process in which the linear cutting pressure is less than 10⁷ N/m and the tolerance in the cutting direction is greater than 0.2 mm, which signifies that with this apparatus it is possible to cut, among other things, sandwich type panels of different compositions.

In more specific terms, these can contain layers of fabric, polyurethane foams, fibreglass, paper, etc., with different thickness.

A typical example of a sandwich panel employed in the manufacturing technologies of roof linings is that constituted by the following layers: paper, fibreglass, adhesive, polyurethane foam, adhesive, fibreglass, plastic film and fabric.

It is also possible to use this apparatus to cut other types of materials like plastics or metals with low hardness.

The cutting apparatus is specially suitable for use in the automobile industry, specifically in the production of motor vehicle roof linings, wherein simultaneously with the moulding of the roof the trimming of the surplus material thereof takes place, in the same machine and in the same operation.

The object of the invention is to be able to absorb the possible misalignments, wear, or imperfections of moulds and working machines, that is to absorb possible deviations in position of moulds, blades and presses within certain limits. This is because in any machine of the aforementioned type there is no "zero" tolerance, and however to achieve an adequate cut a perfect alignment of the elements which intervene is required, for which reason it is necessary that at least one of them be capable of adjustment until adapting to the geometry and position of the other.

### BACKGROUND OF THE INVENTION

In the field of practical application of the invention and up to the present time, three forms of cutting are known with a movement predominantly normal to the surface of the piece to be cut: pressure cutting, cutting by shearing and impact cutting.

Pressure cutting is characterised in that the piece is held between blade and striking plate until the pressure applied by both reaches the value sufficient to cut the piece. In said cutting action blade and striking plate are gradually brought together until in the final instant in which the cutting becomes effective, direct contact takes place between the two.

In cutting by shearing, blade and striking plate have a relative movement such that the material is compelled to part without there being substantial compressive forces present, and without the blade coming to rest directly on the striking plate at any time, in a manner similar to how a pair of scissors would work. It is also applied in cutting machines and moulds.

Impact cutting could be considered a variant of pressure cutting insofar as the configuration of mould and cutting elements is concerned. However in this case the speed with which the mobile part of the mould moves during the cutting operation is much greater so that the cutting force is applied only by the blade, whereby the striking plate simply serves to support the piece in the cutting area.

The cutting apparatus of the invention is applicable to pressure cutting systems, which in many cases of cutting and conforming linings is preferred over the other two systems because of its greater simplicity in implementation and reliability. However pressure cutting, to be effective, requires a very precise alignment between striking plate and blade, which limits its use and needs frequent and specialized operations of maintenance and alignment.

As an example can be cited US 3 269 234, in which an aubroatic cutting machine and method for compensation of misalignment are disclosed.

### DESCRIPTION OF THE INVENTION

The cutting apparatus of the invention comprises the features of claim 1. It is applicable to pressure cutting systems.

The cutting apparatus which the invention discloses centres its characteristics on the fact that one of the two basic elements that participates therein, be it the striking plate, admits certain relative movements of alignment apart from the actual cutting movement. This implies a matching of the moving part to the fixed part, which permits perfect coupling between the two at the end of each cutting cycle, as well as self-alignment with time during the useful life of the cutting tool, and between different machines.

In more specific terms it has been foreseen that the cutting apparatus, as well as being floating, has a certain capacity to be deformed elastically.

Specifically it has been foreseen that the striking plate is flexible and is mounted on an elastic support, in such a way that the pressure of the blade deforms the striking plate to adapt it to the profile of the blade, while the elastic support must have a sufficiently high spring constant to absorb and distribute the cutting force evenly over all points of the edge.

The steel striking plate needs to have sufficient thickness to prevent it from being damaged by the blade, and at the same time also sufficient to be able to adapt by elastic deformation to the latter through its own deformation.

For its part the elastic support located under the striking plate has to be sufficiently rigid to permit a similar thrust on all points of its surface and at the same time prevent the striking plate from being introduced inside it.

In more specific terms, the striking plate will be made of alloy steel for wear-resistant tools of the group F-500 (according to Spanish IHA standards), with surface hardness of between 40 and 60 HRc.

The striking plate can be formed by a single sheet, its thickness being between 0.5 and 5 millimetres, by two or three superimposed sheets of thickness between 0.5 and 5 millimetres each one.

The striking plate runs the whole cutting line and is formed by consecutive segments of at least 200 mm each, and whose width will lie between 4 and 50 mm.

The elastic support or elastomer will be of a thickness between 2 and 8 millimetres and have a Shore A hardness of between 75 and 95.

Between striking plate and elastic support it will be possible to include heat lagging with a thickness of between 0.5 and 2.5 mm, resistant to temperatures up to at least 250° C, when it is foreseen that the working temperatures can impair the effectiveness of the elastomer.

The join between the striking plate and the elastomer or elastic support is free by simply support, the movement of these being guided by the channel in which they are housed and restricted in the direction parallel to that of cutting by a fastening which maintains both elements within said channel by way of a retainer.

### DESCRIPTION OF THE DRAWINGS

To complete the description that is being made and with the object of assisting in a better understanding of the characteristics of the invention, in accordance with a preferred example of practical embodiment of the same, accompanying this description as an integral part thereof, there is a set of drawings wherein by way of illustration and not restrictively, the following has been shown:
Figure 1. - It shows a schematic representation in side elevation of a floating and deformable cutting apparatus embodied in accordance with the object of the present invention, in which the blade appears separate from the striking plate.
Figure 2. - It shows a similar representation to that of the previous figure, in the working position, that is with the blade pressed against the striking plate and both the latter and the elastic support deformed, so that striking plate and blade appear perfectly coupled.
Figure 3. - It shows a detail in cross section of an example of practical embodiment for the fastening of the striking plate to the mould.
Figure 4. - It shows, according to a representation similar to that of the previous figure, a variant of embodiment for said fastening.
Figure 5. - It shows a schematic representation of the cutting apparatus incorporated to the parts (male and female) which conform a mould for conforming and cutting linings.

### PREFERRED EMBODIMENT OF THE INVENTION

In the light of these figures, it can be observed how the blade (1) and the striking plate (3) are mounted on the corresponding parts of the mould, so that the cut takes place simultaneously with the pressing and conforming of the roof.

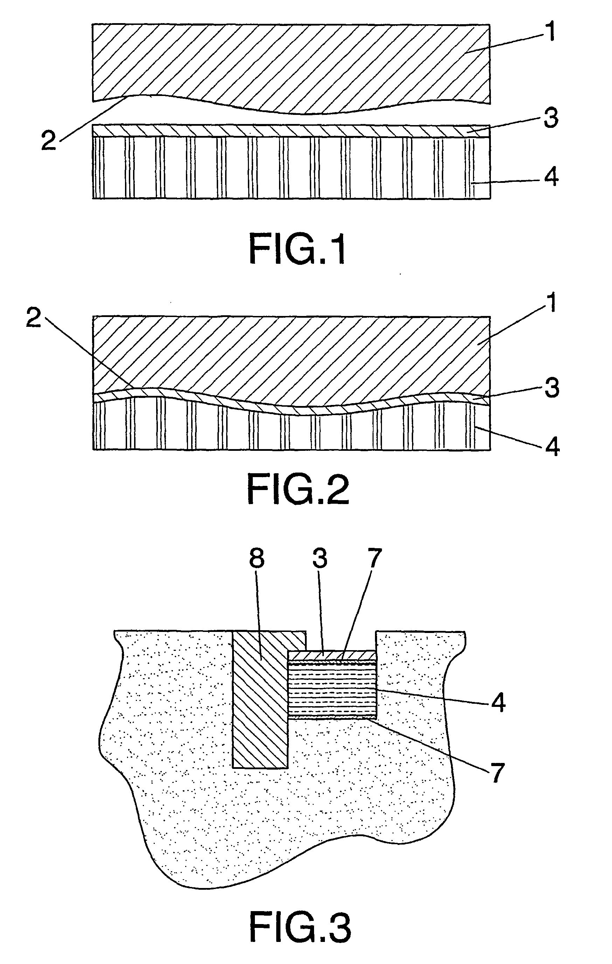

In the light of the figures 1 and 2, it can be observed how in the cutting apparatus which the invention discloses, there participate a blade (1), with a cutting profile (2) which can adopt any configuration in accordance with that foreseen for the piece to be obtained, said blade (1) intended to fall on a striking plate (3), also of steel, initially planar but capable of being deformed under the pressing action of the blade (1), adapting to the configuration of the latter, as is observed in figure 2.

The steel striking plate (3) rests on an elastic support (4), preferably an elastomer which deforms at the same time as the striking plate (3), absorbing the deformation of the latter, as one observes in figure 2.

The striking plate (3), basically laminar, needs to have sufficient thickness to prevent it from being damaged by the blade (1), allowing nevertheless a perfect coupling with the latter when both are subjected to the cutting force.

If the thickness of the striking plate is small the latter will be cut by the blade, whilst if the thickness of the striking plate is large the desired deformation will not be achieved and therefore gaps will be produced between blade and striking plate, resulting in a faulty cut.

For its part the elastomer (4) has to be sufficiently rigid to allow a similar thrust on all points thereof and at the same time prevent the striking plate from penetrating inside it.

A soft elastomer would cause the striking plate to be driven inside it causing the shearing thereof, whilst a very hard elastomer, even if achieving the deformation to match the blade and striking plate, would have differences in pressure which would also cause the cut to be deficient in some points and increase the risk of wear or premature damage in the blade.

The most suitable values for the aforesaid parameters have been stated previously.

The striking plate has to have its movement restricted inside its housing to prevent it being pulled by the blade on withdrawing the latter.

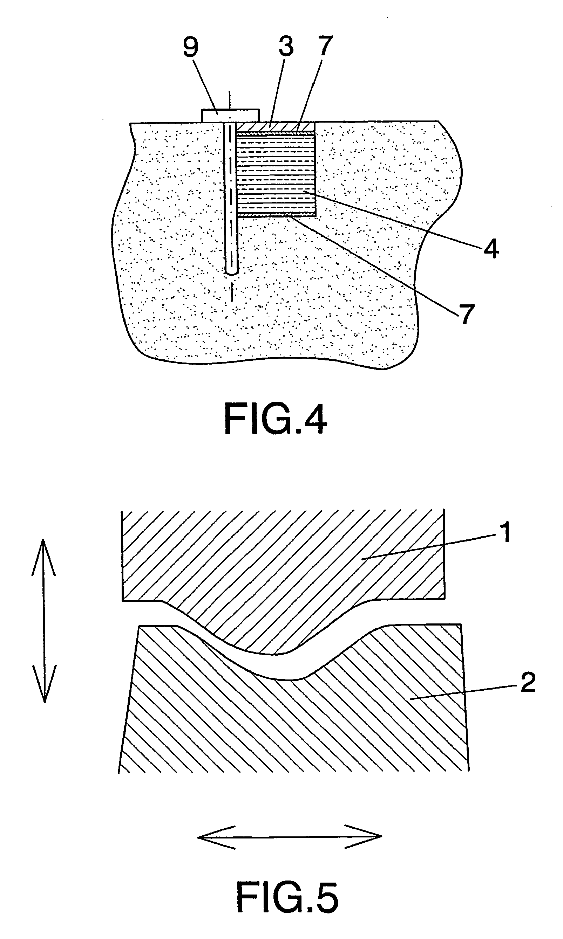

Two of the possible arrangements are described below. In the detail in cross-section of figure 3 a first example of practical embodiment has been represented for the fastening of the striking plate (3) to the mould tool (5), specifically inside a channel (6) of the latter, in which example said channel (6) is of considerably more width than the striking plate (3), so that after the emplacement inside said channel (6) of the elastomer (4) and in the event of the insulating material (7), the securing is carried out with the collaboration of a wedge (8) press-fitted in the space of the channel (6) left free by the striking plate (3).

Nevertheless and as shown in figure 4, the striking plate (3) can be of the same width as the channel (6), so that said striking plate (3) with the elastomer (4) and the lagging (7) is secured to the mould by means of a fastening screw (9) located laterally with respect to the striking plate (3), the same as what occurred with the press-fitted wedge (8) of the example of the previous figure.

The purpose of the lagging (7), which is optional, is to prevent transmission of the heat from the mould to the striking plate, when the working temperatures are sufficiently high as to degrade the material of the elastomer.

From the structure described a number of advantages arise which can be synthesized in the following aspects:
- The apparatus allows the same tool to be used in different machines without the need for prior adjustments.
- Additional manual work is not necessary to achieve good alignment, of the cutting tools when these are replaced, repaired or employed in different machines.
- The pieces obtained can be mounted directly as they leave the moulding-cutting machine avoiding subsequent reworking operations.
- Excessive or abnormal wear is substantially reduced in both the blade (1) and the striking plate (3), by achieving that in all the cycles the cutting force is distributed evenly along the whole cutting line and thereby preventing the force being concentrated in particular areas of the edge of the blade or of the striking plate.
- It is possible to make replacements without having to make alignments.
- Its maintenance is simple, not requiring very specialized operatives.
- Cutting faults can be resolved on the working machine itself.
- The cutting quality is notably enhanced, assuring that said cut is produced under a wider range of circumstances.
- It allows working with different values of cutting force which allows either working with different materials using the same tool or doing partial or marked cuts if so desired.

## Claims

1. - Deformable floating cutting apparatus, which being of special application both in machines which perform only the cutting and in those which carry out simultaneously the pressing, conforming and trimming of a sandwich type piece or similar, like for example in the production of roof linings for vehicles, and having the objective of absorbing possible positional deviations both in the cutting elements and the moulds and of the working machines themselves, is **characterised in that** the striking plate (3) is mobile and deformable elastically preferably of flexible steel in order to adapt to the cutting profile (2) of the blade (1), said striking plate (3) being mounted, simply resting or with the interposing of an insulating layer (7), on an.elastic support (4) which absorbs the cutting pressure and the deformation of the striking plate, wherein the following parameters are established:
- the striking plate (1) is made from wear-resistant alloy steel, of the F-500 group according to IHA standards, with surface hardness of between 40 and 60 HRc;
- the thickness of the striking plate (1) is between 0.5 and 5 mm, its length covers the whole cutting line and it is formed in consecutive segments of at least 200 mm each and its width is between 4 and 100 mm.
- the elastic support (4) has a thickness of between 2 and 8 mm, and it has a Shore A hardness of between 75 and 95.

2. Deformable floating cutting apparatus, according to claim 1, **characterised in that** the striking plate (3) is materialized in a metal band, preferably of steel, elastically deformable which rests on a support (4) in turn elastic, preferably an elastomer, with a spring constant sufficient to withstand the cutting pressure, avoiding the permanent deformation of the striking plate.

3. - Deformable floating cutting apparatus, according to claims 1 or 2, **characterised in that** optionally the striking plate (3) has a multi-layer structure, specifically with thickness of between 0.5 and 5 mm in each layer.

4. - Deformable floating cutting apparatus, according to anyone of the previous claims, **characterised in that** the striking plate (3) and the elastic support (4), in the free segment of the Latter, are connected to each other without the need for additional means of joining the two.

5. - Deformable floating cutting apparatus, according to anyone of the previous claims, **characterised in that** it is capable of also including an insulating layer with a thickness of between 0.5 and 2.5 mm and a resistance to temperatures of up to at least 200° C.

6. - Deformable floating cutting apparatus, according to anyone of the previous claims, **characterised in that** the striking plate and the elastic support (4) are located in a channel (6) of the mould (5), with the collaboration of a fastening system which maintains both elements within said channel by way of retainer, the movement of these being guided by said channel which houses them and restricted in the direction parallel to that of cutting.

7. - Deformable floating cutting apparatus, according to anyone of the previous claims, **characterised in that** the system of fastening the striking plate (3), in the channel (6) of the mould (5), is implemented with the collaboration of a tightening wedge (8) or with the collaboration of a screw (9), which in any case act on at least one of the sides of the striking plate (3).

## Patentansprüche

1. Verformbare, schwebende Schneidvorrichtung, die besonders sowohl bei Maschinen, die nur das Schneiden durchführen, als auch bei denen, die gleichzeitig das Pressen, Anpassen und Beschneiden eines Schichtwerkstoffteils oder dergleichen ausführen, eingesetzt wird, so beispielsweise bei der Herstellung von Dachhimmeln für Fahrzeuge, und die dazu dient, mögliche Positionsabweichungen sowohl bei den Schneidelementen als auch den Formen und den Bearbeitungsmaschinen selbst auszugleichen, wobei sie **dadurch gekennzeichnet ist, dass** die Schlagplatte (3) beweglich und elastisch verformbar ist und vorzugsweise aus flexiblem Stahl besteht, um sich an das Schneidprofil (2) der Schneide (1) anzupassen, wobei die Schlagplatte (3) so angebracht ist, dass sie einfach oder mit einer dazwischen befindlichen Isolierschicht (7) auf einem elastischen Träger (4) aufliegt, der den Schneiddruck und die Verformung der Schlagplatte absorbiert, und die folgenden Parameter gegeben sind:
die Schlagplatte (3) besteht aus verschleißbeständigem Legierungsstahl der Gruppe F-500 nach IHA-Standards mit einer Oberflächenhärte zwischen 40 und 60 HRc;
die Dicke der Schlagplatte (3) beträgt zwischen 0,5 und 5 mm, ihre Länge deckt die gesamte Schnittlinie ab, sie ist in aufeinander folgenden Segmenten von wenigstens jeweils 200 mm ausgebildet und ihre Breite beträgt zwischen 4 und 100 mm,
der elastische Träger (4) hat eine Dicke zwischen 2 und 8 mm, und er hat eine Shore-A-Härte zwischen 75 und 95.

2. Verformbare schwebende Schneidvorrichtung nach Anspruch 1, **dadurch gekennzeichnet, dass** die Schlagplatte (3) als ein Metallstreifen, vorzugsweise aus Stahl, ausgeführt ist, der elastisch verformbar ist und auf einem Träger (4) aufliegt, der seinerseits elastisch ist und vorzugsweise aus einem Elastomer besteht und eine Federkonstante hat, die ausreicht, um dem Schneiddruck zu widerstehen und die dauerhafte Verformung der Schlagplatte zu vermeiden.

3. Verformbare schwebende Schneidvorrichtung nach Anspruch 1 oder 2, **dadurch gekennzeichnet, dass** optional die Schlagplatte (3) eine mehrschichtige Struktur hat und insbesondere mit einer Dicke zwischen 0,5 und 5 mm in jeder Schicht.

4. Verformbare schwebende Schneidvorrichtung nach einem der vorangehenden Ansprüche, **dadurch gekennzeichnet, dass** die Schlagplatte (3) und der elastische Träger (4) im freien Segment des letzteren miteinander verbunden sind, ohne dass zusätzliche Einrichtungen zum Verbinden der beiden miteinander erforderlich sind.

5. Verformbare schwebende Schneidvorrichtung nach einem der vorangehenden Ansprüche, **dadurch gekennzeichnet, dass** sie auch eine isolierende Schicht mit einer Dicke zwischen 0,5 und 2,5 mm und einer Beständigkeit gegenüber Temperaturen bis zu wenigstens 200°C enthalten kann.

6. Verformbare schwebende Schneidvorrichtung nach den vorangehenden Ansprüchen, **dadurch gekennzeichnet, dass** die Schlagplatte und der elastische Träger (4) in einem Kanal (6) der Form (5) im Zusammenwirken mit einem Befestigungssystem angeordnet sind, das beide Elemente mittels einer Halteeinrichtung in dem Kanal hält, wobei die Bewegung derselben durch den Kanal geführt wird, der sie aufnimmt, und in der Richtung parallel zu der des Schneidens eingeschränkt ist.

7. Verformbare schwebende Schneidvorrichtung nach einem der vorangehenden Ansprüche, **dadurch gekennzeichnet, dass** das System zum Befestigen der Schlagplatte (3) in dem Kanal (6) der Form (5) im Zusammenwirken mit einem Spannkeil (8) oder im Zusammenwirken mit einer Schraube (9) umgesetzt wird, die in jedem Fall auf wenigstens eine der Seiten der Schlagplatte (3) wirken.

## Revendications

1. Dispositif de coupe flottant déformable, d'une application spéciale à la fois à des machines qui exécutent seulement la coupe et à celles qui exécutent simultanément la compression, le formage et le détourage d'une pièce de type sandwich ou similaire, comme par exemple, lors de la fabrication de garnitures de toit pour des véhicules, et ayant pour objectif d'absorber des écarts de position éventuels à la fois dans les éléments coupants et les moules et des machines d'usinage elles-mêmes, **caractérisé en ce que** la plaque d'amorçage (3) est mobile et est déformable élastiquement, de préférence en acier flexible pour l'adaptation au profil coupant (2) de la lame (1), ladite plaque d'amorçage (3) étant montée, en reposant simplement ou bien avec l'interposition d'une couche d'isolation (7), sur un support élastique (4) qui absorbe la pression de coupe et la déformation de la plaque d'amorçage, où les paramètres suivants sont fixés:
- la plaque d'amorçage (1) est réalisée en un acier d'alliage résistant à l'usure, du groupe F-500 selon les standards IHA, la dureté de surface étant entre 40 et 60 HRc;
- l'épaisseur de la plaque d'amorçage (1) est entre 0,5 et 5 mm, sa longueur couvre toute la ligne de coupe et est réalisée par des segments consécutifs d'au moins 200 mm chacun, et sa largeur est entre 4 et 100 mm;
- le support élastique (4) a une épaisseur entre 2 et 8 mm, et une dureté Shore A entre 75 et 95.

2. Dispositif de coupe flottant déformable selon la revendication 1, **caractérisé en ce que** la plaque d'amorçage (3) est matérialisée dans une bande métallique, de préférence en acier, élastiquement déformable qui repose sur un support (4) élastique à son tour, de préférence un élastomère, avec une constante de ressort suffisante pour résister à la pression de coupe, en évitant la déformation permanente de la plaque d'amorçage.

3. Appareil de coupe flottant déformable selon les revendications 1 ou 2, **caractérisé en ce que**, en option, la plaque d'amorçage (3) possède une structure multi-couche, en particulier d'une épaisseur entre 0,5 et 5 mm dans chaque couche.

4. Dispositif de coupe flottant déformable selon l'une des revendications précédentes, **caractérisé en ce que** la plaque d'amorçage (3) et le support élastique (4), dans le segment libre de ce dernier, sont reliés l'un à l'autre sans qu'un moyen additionnel soit nécessaire pour les relier.

5. Dispositif de coupe flottant déformable selon l'une des revendications précécentes, **caractérisé en ce qu'**il est apte à inclure également une couche d'isolation d'une épaisseur entre 0,5 et 2,5 mm et d'une résistance à des températures jusqu'au moins 200°C.

6. Dispositif de coupe flottant déformable selon l'une des revendications précédentes, **caractérisé en ce que** la plaque d'amorçage et le support élastique (4) se situent dans un canal (6) du moule (5), avec la collaboration d'un système de fixation qui maintient les deux éléments dans ledit canal au moyen d'un organe de retenue, le mouvement de ceux-ci étant guidé par ledit canal qui les loge et est limité dans la direction parallèle à celle de la coupe.

7. Dispositif de coupe flottant déformable selon l'une des revendications précédentes, **caractérisé en ce que** le système de fixation de la plaque d'amorçage (3), dans le canal (6) du moule (5), est réalisé avec la collaboration d'un coin de serrage (8) ou avec la collaboration d'une vis (9) qui agit dans tous les cas sur au moins l'un des côtés de la plaque d'amorçage (3).
